# EUROPEAN PATENT SPECIFICATION

(11) **EP 2 763 074 B1**
(45) Date of publication and mention of the grant of the patent: **02.10.2019**
(21) Application number: 13165181.2
(22) Date of filing: 24.04.2013
(51) Int. Cl.: G06F 21/60, G06F 21/62

(54) **PORTABLE TERMINAL, DOCUMENT MANAGEMENT METHOD, AND PORTABLE TERMINAL PROGRAM**
TRAGBARES ENDGERÄT, DOKUMENTVERWALTUNGSVERFAHREN UND TRAGBARES ENDGERÄTEPROGRAMM
TERMINAL PORTABLE, PROCÉDÉ DE GESTION DE DOCUMENT ET PROGRAMME DE TERMINAL PORTABLE

(30) Priority: 31.01.2013 JP 2013017975
(43) Date of publication of application: 06.08.2014
(73) Proprietor: Optim Corporation, Saga 849-0916 (JP)
(72) Inventor: Sugaya, Shunji, Tokyo, Tokyo 108-0014 (JP)
(74) Representative: Plougmann Vingtoft a/s

(56) References cited:
- US-A1- 2007 168 294
- US-A1- 2011 016 240
- US-A1- 2012 284 779

## Description

### BACKGROUND OF THE INVENTION

The present invention relates to a portable terminal that properly manages a document, a document management method, and a portable terminal program.

In recent years, with the spread of high-functional portable terminals, often referred to as smartphone or tablet, cases have increased in which companies provide high-function portable terminals to employees, and these terminals are used as information terminals. In such a terminal, it is often required to prevent information from leaking when the terminal is lost, or inhibit or restrict taking out the terminal and/or inhibit or restrict private use thereof, by introducing a terminal management system called a MDM (Mobile Device Management) system.

In such a high-functional portable terminal, a user can download documents to view from a server in e.g. a head office through the Internet even at a location physically separated from offices such as sites of business by using an MCM (Mobile Contents Management) operating on the MDM. Thereby, employees can share up-to-date information without any physical constraints.

Meanwhile, specific conditions are set for an important document such as a contract under preparation, thereby the document may be treated according to a different security policy from other documents. For example, there is a demand or need that important documents be allowed to be accessed only by specific group of employees, be giving a restriction on access when outside the office, or not allowed to be accessed after a specific date and time.

With respect to such a problem, a method is disclosed in which the efficiency and the stability of information management are increased while suppressing or preventing the leakage of confidential information using a license policy. For example, Japanese Patent Application Laid-open Publication No. 2009-196865 discloses a method in which when an access to a document is requested, protective data are edited based on license information that defines persons authorized to access the document.

According to Japanese Patent Application Laid-open Publication No. 2009-196865, disclosed is a method in which when an access to target data including protective data and unprotective data is requested, the protective data is prohibited from being edited or accessed based on license information that defines persons authorized to access the target data. That is, only the respective portions, out of the protective data, allowed to be opened to a person who has a license and a person who does not have a license are opened to them, respectively, thereby allowing the protective data to be opened to only a person with a valid right of access.

However, in the method disclosed in Japanese Patent Application Laid-open Publication No. 2009-196865, determination is made only based on whether the user has a license or not, and thus it is difficult to cope with a complicated security policy as required in the site with such a method.

For example, inhibiting materials in the office from being taken out is highly required due to frequent occurrence. However, as compared to physical materials, it has been difficult so far to inhibit electronic files from being accessed outside of the office while allowing them available freely within the office. In this regard United States Patent Application Publication No. US 2011/0162040 discloses a system wherein access to a file may be controlled based on the domain or network a recipient is connected to.

The present invention is contrived in view of such circumstances, and an object thereof is to provide a portable terminal, a document management method, and a portable terminal program which are capable of coping with a complicated security policy regarding a parameter, such as location information or a time, which is able to be acquired in a portable terminal, not editing a document, sharing the document in an encoded state, and performing document management in a mode in which information regarding the decoding of the document is provided only to a terminal group having a valid authority. It is a further object of the present invention to provide an alternative to the prior art.

### SUMMARY

In the present invention, the following solutions are provided.

A portable terminal for uploading a document to and downloading a document from a document server according to claim 1.

A method for uploading a document to and downloading a document from a document server, performed by a portable terminal, according to claim 6.

Preferred embodiments are defined by the dependent claims.

According to the present invention, it is possible to provide a portable terminal, a document management method, and a portable terminal program which are capable of handling a complicated security policy regarding a parameter, such as location information or a time indication, which is able to be acquired in a portable terminal, inhibiting or preventing editing a document, sharing the document in an encoded state, and performing document management in a mode in which information regarding the decoding of the document is provided only to a terminal group having a valid authority.

### BRIEF DESCRIPTION OF DRAWINGS

Fig. 1 is a diagram schematically illustrating a document management system 1.
Fig. 2 is a diagram illustrating the overall configuration of the document management system 1.
Fig. 3 is a functional block diagram illustrating a portable terminal 10 and a document server 200.
Fig. 4 is a flow diagram illustrating document upload process executed by the portable terminal 10 and the document server 200.
Fig. 5 is a flow diagram illustrating document opening process executed by the portable terminal 10 and the document server 200.
Fig. 6 is an example of a screen displayed on the portable terminal 10 during the document opening process when security conditions are not satisfied.
Fig. 7 is an example of an access group list used by the document server 200.
Fig. 8 is an example of a document table within a document database 210.

### DETAILED DESCRIPTION

Hereinafter, a best mode for carrying out the present invention will be described with reference to the accompanying drawings. Meanwhile, it is merely illustrative of the present invention, and the technical scope of the present invention is not limited thereto.

In a document management system 1, a portable terminal 10 encodes a document 2, and uploads the document to a document server 200. Then, the document server 200 is notified of other portable terminals 10A and 10B having the right of access to the document 2 as an access group 9, and information for decoding the document is transmitted to the portable terminals 10A and 10B. At this time, only the portable terminals 10A and 10B is permitted to download the document 2 from the document server 200, and decode the document. Further, the portable terminal 10 sets a security parameters so that it can impose a restriction on an access to the document 2 by not only a unique ID of a terminal but also an access time or a current location of a terminal.

### [Outline of Document Management System 1]

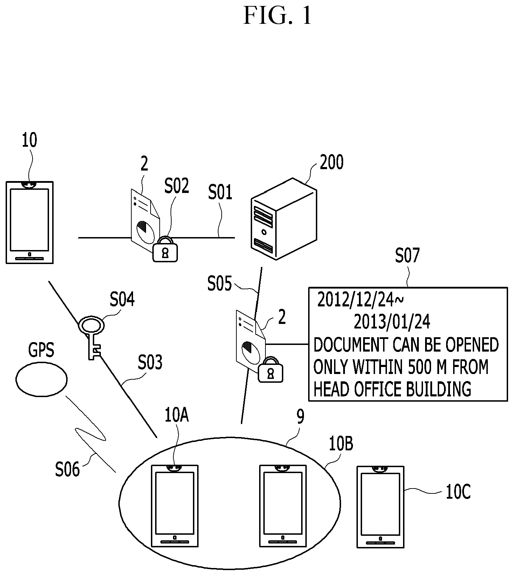

Fig. 1 is a diagram illustrating an outline of the document management system 1 according to a preferred embodiment of the present invention. The document management system 1 comprises portable terminals 10, 10A, 10B, and 10C, and a document server 200.

In the document management system 1, each of the portable terminals 10, 10A, 10B, and 10C can communicate with the document server 200 through a public network such as a LAN or the Internet. Also, the portable terminals 10, 10A, 10B, and 10C can communicate with each other through a public network such as a LAN or the Internet.

In the document management system 1, the portable terminal 10 first starts a procedure of uploading the document 2 to the document server 200 (step S01). Herein, the portable terminal 10 does not commence communication immediately but collect document information associated with the document 2.

In a process of uploading the document, the portable terminal 10 may first confirm whether the document 2 is an editable file as a text. When it is undesirable for the document 2 to be edited in view of its attribute, the portable terminal 10 may convert the document 2 into binary data, such as a pdf format or an image format, which is not editable as a text.

Next, the portable terminal 10 determines an encoding scheme for the document 2 and security parameters, and then encodes the document 2 (step S02). The encoding scheme may be a password scheme, a common key scheme or the like. In a process of determining the encoding scheme, one of schemes previously stored in the portable terminal 10 is determined in accordance with a security policy of the company and/or the importance of the document 2.

Similarly, the security parameters are used for restricting a location, a time or the like where or when the document 2 can be opened. Similarly, at least one of parameters stored in the portable terminal 10 in advance may be determined in accordance with a security policy of the company or the importance of the document 2. That is, a material of lower importance like a published balance account report can be accessed even at home. However, for an important document such as a contract which is being negotiated behind the scenes, security parameters are set according to a restriction policy that the document e.g. is available only within a physical distance of 500 meters from the head office, or other location. The security parameters may be set to give restriction on not only a place or a time, but any other arbitrary, optional parameters, such as a date, a day of the week, a time period, and a communication intensity, that can be acquired in a portable terminal.

Here, the portable terminal 10 determines the access group 9 comprising terminals which are allowed to open the document 2 (step S03). In a process of determining the access group, the group may be selected by a user in each case, or may be automatically determined by a storing directory or the like of the document 2 before upload.

The portable terminal 10 transmits the encoded document 2 and document information thereof to the document server 200, and stores them in the document server, thereby allowing the terminals belonging to the access group 9 to acquire the document 2 from the document server 200. The portable terminal 10 itself may be or may not be included in the access group 9. In addition, the access group 9 may be registered in advance, or may be newly created in this stage.

Next, the portable terminal 10 transmits information for decoding the document 2 to the terminals belonging to the access group 9 (step S04). In a case of password authentication, a password itself may be transmitted, and an ID of a password stored in the portable terminal 10A or the like in advance may be provided. When it comes to a common key scheme, since it is not preferable to transmit a secret key itself through a communication path, it is preferable to transmit only information indicating the secret key used for decoding.

Herein, only the portable terminals 10A and 10B having a valid authority are able to acquire the document 2 from the document server 200 (step S05), and decode the acquired document 2. On the other hand, the portable terminal 10C which does not belong to the access group 9 is not able to acquire the document 2 from the document server 200, or perform the decoding thereof even if the portable terminal 10C wiretaps a communication path to acquire the document 2.

By means of the above process, the document 2 can be opened only on a terminal having a valid authority. Further, the document management system 1 can cope with or handle a complicated security policy on the basis of one or more of the above-mentioned security parameters.

For example, it is more difficult to prevent the document 2 in an electronic file from being taken out than a physical material. However, in the document management system 1, when the security parameters such as "within 500 m from the head office building" are set for the document 2, access to the document outside of the office can be limited.

That is, the portable terminal 10A acquires location information by location information acquisition means in the portable terminal 10A before the decoding thereof is performed (step S06). When a portable terminal detects security parameters regarding a location in the document 2 which has been downloaded from the document server 200 (step S07), the portable terminal determines whether the acquired location information satisfies the security parameters, and displays an error message without decoding the document 2 when it is determined that the portable terminal is not on a proper location.

Disclosed in the above is a system configuration of the document management system 1. Herein, the security parameters can be set for all the attributes that a portable terminal can acquire. If the security parameters are set for an attribute which the portable terminal 10A cannot acquire, it may be determined that the security parameters are not fulfilled.

### [System Configuration of Document Management System 1]

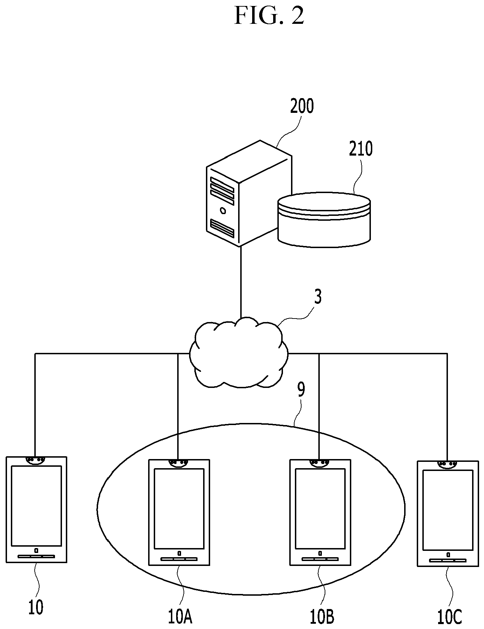

Fig. 2 is a system configuration diagram illustrating the document management system 1 according to a preferred embodiment of the present invention. The document management system 1 comprises portable terminals 10, 10A, 10B, and 10C, a document server 200, and a public network 3 (Internet network, 3G/4G communication network or the like).

The portable terminal 10 is an electric appliance for household or business which is capable of performing data communication, and expected to be used while being carried around. For example, it may be information appliances such as a netbook terminal, a tablet computer, an electronic book terminal, or a portable music player, in addition to a cellular phone and a portable information terminal. The portable terminal may incorporate several of these functionalities. In Fig. 2 the portable terminals 10A, 10B, and 10C are physically the same as or similar to the portable terminal 10, and are not distinguished from each other.

In addition, the document 2 which is managed in the document management system 1 may be any type of electronic data, and may be software capable of being executed in a personal computer or a specific device, and also be types such as a text document, a slide show, an image, a moving image, and a sound, or a combination thereof. In addition, the document 2 is not required to be a single file, but may be a data string such as a portion or an entirety of a moving image reproduced in a streaming manner, or metadata for defining how to acquire the data string or a type of the data string.

The document server 200 is a processor such as a server having a function described later.

### [Description of Each Function]

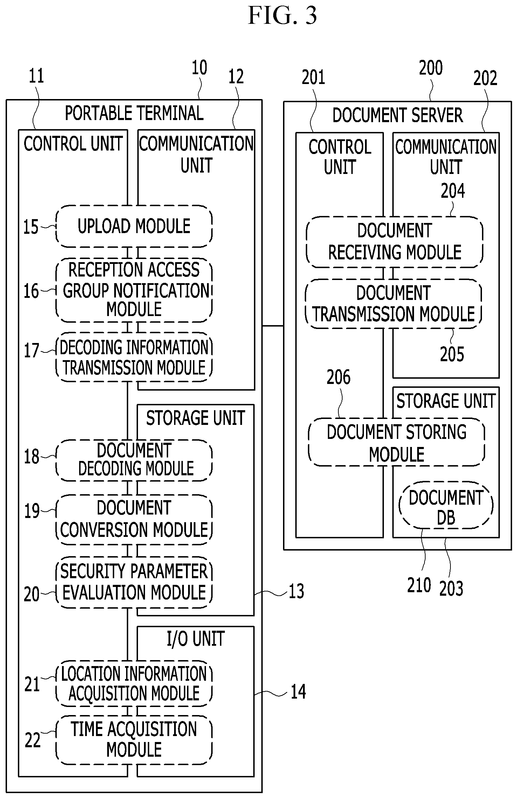

A configuration of each device will be described with reference to Fig. 3.

The portable terminal 10 comprises, a control unit 11 including a CPU (Central Processing Unit), a RAM (Random Access Memory), a ROM (Read Only Memory), and the like, and a communication unit 12 including a device capable of communicating with other devices, such as a WiFi (Wireless Fidelity) corresponding device according to IEEE802.11.

The portable terminal 10 further comprises a storage unit 13 for storing data or files which is a data storage realized by a hard disk, a semiconductor memory, a recording medium, a memory card or the like, and an I/O unit 14 including a display unit for outputting and displaying data or an image controlled by the control unit, a clock function for acquiring a time, a location information acquisition device, and a sensor for detecting altitude, communication strength, inclination, acceleration or the like, in addition to a touch panel, a keyboard, or a mouse for receiving an input from a user.

In the portable terminal 10, the control unit 11 realizes, by loading a predetermined program, an upload module 15, a reception access group notification module 16, and a decoding information transmission module 17 in cooperation with the communication unit 12. In addition, in the portable terminal 10, the storage unit 13 realizes, by loading a predetermined program, a document decoding module 18, a document conversion module 19, and a security parameter evaluation module 20 in cooperation with the communication unit 12. In addition, in the portable terminal 10, the control unit 11 realizes, by loading a predetermined program, a location information acquisition module 21 and a time acquisition module 22 in cooperation with the I/O unit 14.

The document server 200 comprises a control unit 201 including a CPU, a RAM, a ROM and the like, similarly to the portable terminal 10, and a communication unit 202 including, for example, a WiFi corresponding device according to IEEE802.11, or other electric appliances such as a device capable of being connected by a cable, and a device for performing data communication with a wireless access point. In addition thereto, the document server 200 further comprises a storage unit 203 for storing data or files which is a data storage realized by a hard disk or a semiconductor memory, a recording medium, a memory card or the like. A document database 210 for storing the document 2 and its document information is included in the storage unit 203.

In the document server 200, the control unit 201 realizes, by loading a predetermined program, a document receiving module 204 and a document transmission module 205 in cooperation with the communication unit 202. In addition, in the document server 200, the control unit 201 realizes, by loading a predetermined program, a document storing module 206 in cooperation with the storage unit 203.

### [Document Upload Process]

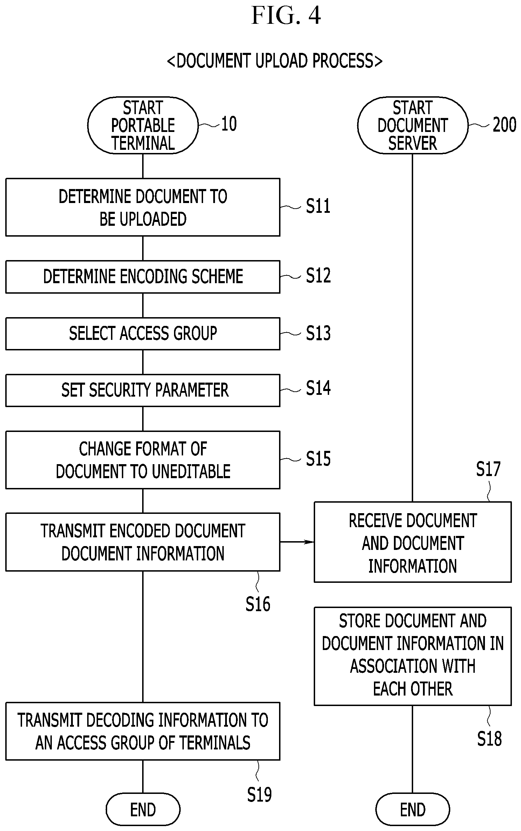

Fig. 4 is a flow diagram of document upload process executed by the portable terminal 10 and the document server 200. Performance of the modules of each device as described above will be explained with the present process.

First, the upload module 15 of the portable terminal 10 determines the document 2 to be uploaded (step S11). Herein, a document to be uploaded may be selected directly by a user, or a document may be set to be uploaded at a regular interval for the purpose of a periodical backup or information sharing.

Next, the upload module 15 determines an encoding scheme of the document 2 (step S12). The encoding scheme may be a password or a common key scheme, or other suitable encryption scheme. Furthermore, as long as security during transmission or after transmission is guaranteed, an encoding scheme using a format which is not general but unique can be employed.

Next, the reception access group notification module 16 of the portable terminal 10 selects the access group 9 including a group of terminals which are allowed to access to the document 2 (step S13). A terminal which does not belong to the selected access group 9 is not able to access to the document 2.

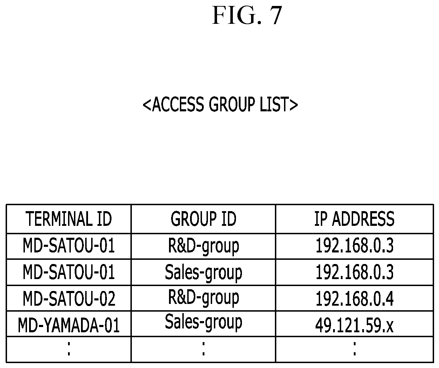

Fig. 7 is an example of a list of access groups used by the document server 200. In the list, access group IDs to which individual terminals belong and IP addresses are stored. Herein, one terminal cannot belong to a plurality of access groups. In addition, the IP address is used for communication described later, and may be a global IP address, a local IP address or a domain name as long as a communication path with other terminals can be established. In this example, the reception access group notification module 16 may be adapted just to notify the document server 200 of the access group ID of an access group to give allowance to access. The terminal ID may be a unique value for each terminal, a value allocated to a terminal when shipped from the factory like a UDID, or a mail address, MAC address or the like which is associated with a terminal in one-to-one correspondence.

Next, the upload module 15 sets security parameters of the document 2 (step S14). The security parameters are used in determining whether a file is allowed to be opened depending on a location, a time or the like where or when the file is opened. For example, in order to preventing the document 2 in an electronic file from being taken out, security parameters such as "within 500 meters from the head office building" may be provided to the document 2, and then the access to the document outside of the office is limited.

The security parameters may be set through an input from a user, or may be set in advance for each security level of the document. For example, when the security level is "high", restrictions of 'only a period of one month after uploading' or 'only an access within 500 meters from the head office building' may be set. Other than that, complicated conditions such as 'only specific morning hours', 'only Tuesday', or 'only after the elapse of a week from uploading' can be also established as a restriction by appropriately setting the security parameters.

Next, the document conversion module 19 of the portable terminal 10 determines whether the document 2 is editable as a text. When the document is editable, the document conversion module converts the document into a binary format, such as a pdf or image format, which is not editable as a text (step S15). This is to prevent a file from being edited while allowing access to the file, when it is not desirable to allow edit of the file.

Next, the upload module 15 encodes the document using the above-mentioned specific encoding scheme, and transmits the encoded document and its document information including security parameters or information of the access group 9 to the document server 200 (step S16).

The document receiving module 204 of the document server 200 receives the document and the document information (step S17). Thereafter, the document and the document information are stored in a storage unit in association with each other (step S18).

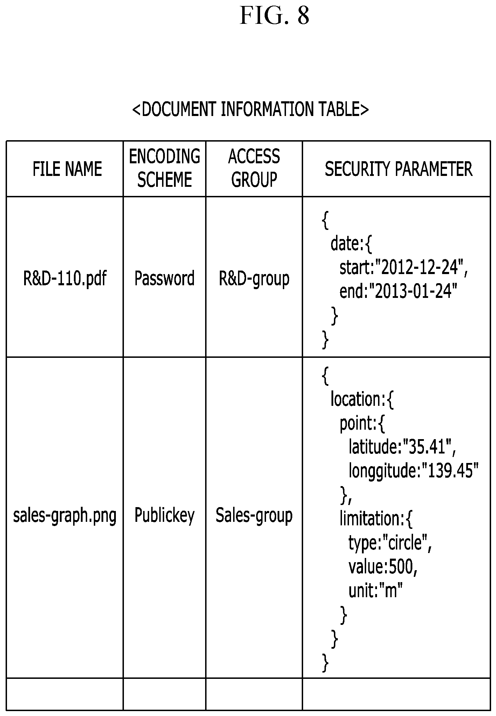

Fig. 8 is an example of a document information table in the document database 210. Herein, a file name of a document and document information are stored in association with each other. For example, a file of which the file name is "R&D-110.pdf" is encoded by a password scheme, and only terminals belonging to an "R&D-group" access group are allowed to access thereto.

In addition, "R&D-110.pdf" can be accessed only from December 24, 2012 to January 24, 2013 according to the security parameters. Except for this period, even the terminal belonging to the "R&D-group" access group cannot open the file. Similarly, "sales-graph.png" is encoded by a common key scheme. Only terminals belonging to a "Sales-Group" access group are allowed to access thereto and further access is allowed only within a range of 500 m from a spot located at a latitude of 35.41° and a longitude of 139.45°.

In Fig. 8, as an example, though the security parameters are described in a JSON format, other formats of the security parameters may be used as long as the security parameters is described in a specific format. That is, the security parameters may be described in a general format such as JSON or xml, or may be described in a format which can be interpreted only in the document management system 1.

Lastly, the decoding information transmission module 17 of the portable terminal 10 transmits information for decoding the document 2 to a terminal belonging to the access group 9 (step S19). Here, information of the terminal may be received from the document server 200, and the transmission may also be carried out via the document server 200. However, when the transmission is carried out without the document server 200, a transmission path of the document may be different from that of the decoding information, thereby further improving safety on security.

Aforementioned is the document upload processes executed by the portable terminal 10 and the document server 200.

### [Document Opening Process]

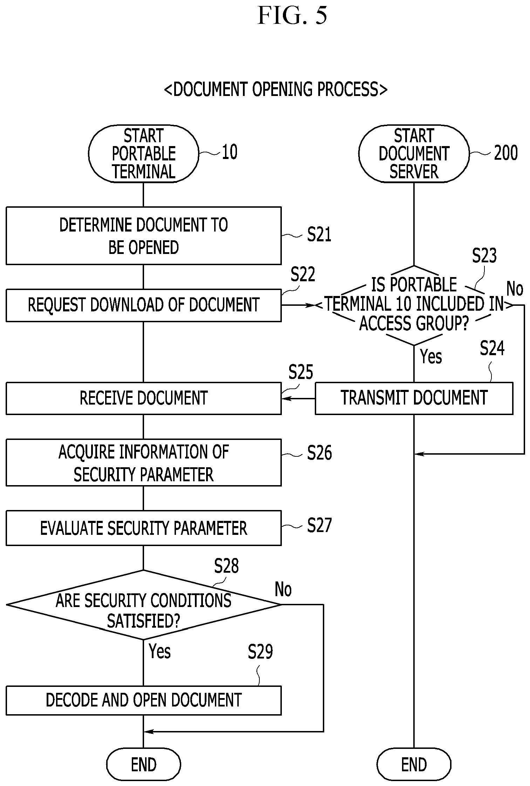

Fig. 5 is a flow diagram of a document opening process executed by the portable terminal 10 and the document server 200. A process performed by the module of each device mentioned above will be described together with the present process.

First, the document decoding module 18 of the portable terminal 10 determines a document to open (step S21). Here, the document may be selected on the basis of an input from a user, or a specific document may be automatically selected at a specific time in such a manner like a scheduled contact. Hereinafter, this document is referred to the document 2.

Next, the portable terminal 10 requests the document server 200 to transmit the specified document 2 (step S22). When the document 2 is previously received from the document server 200, and is stored in a storage unit, step S22 to step S25 may be omitted.

The document transmission module 205 of the document server 200 receives the transmission request, and the document storing module 206 determines whether a terminal which has sent the transmission request is included in an access group of the document 2 (step S23). When the terminal is not included therein (step S23: "NO"), the document is not transmitted, and the document opening process is terminated as it is. When the terminal is included in the access group (step S23: "YES"), the document transmission module 205 transmits the document 2 together with its document information to the portable terminal 10 (step S24). The upload module 15 of the portable terminal 10 receives the document 2 and the document information from the document server 200 (step S25).

Next, the portable terminal 10 acquires information associated with evaluation of security parameters (step S26). As an example, the location information acquisition module 21 acquires a current location of the portable terminal 10. In addition, the time acquisition module 22 acquires a current date, a time, and a day of the week. Here, the kind of the information associated with the evaluation of the security parameters may be stored in advance by the portable terminal 10, or may be received from the document server 200.

Next, the security parameter evaluation module 20 of the portable terminal 10 interprets the security parameters included in the received document information, and evaluates the acquired information associated with the evaluation of the security parameters (step S27). For example, when a range of a location is provided as the security parameters, it is determined whether the current location information satisfies the range condition.

Here, when the security conditions are not satisfied (step S28: "NO") as a result of the evaluation performed by the security parameter evaluation module 20, the document 2 is not opened, and the document opening process is terminated as it is.

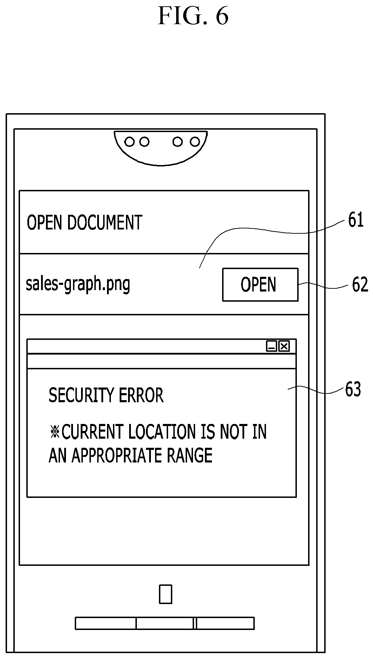

Fig. 6 is an example of a screen of the portable terminal 10 when the security conditions are not satisfied. The file name 61 of the document 2 to open is displayed on the screen, and a command to open the document is received as an input when a user pushes a button 62. However, when it is evaluated in step S28 that the security conditions regarding the location are not satisfied, an error message 63 is displayed, and the document 2 is not allowed to be opened.

On the other hand, when the security conditions are satisfied (step S28: "YES"), the document 2 is decoded and opened using decoding information received from the portable terminal 10 which has uploaded the document 2 previously (step S29), thereby allowing the document to be accessed. Here, the decoding information is stored in the storage unit of the portable terminal 10, and it is possible to prevent a user from using the decoding information to open a file in disregard of the security conditions by inhibiting other process from referring to the decoding information.

Aforementioned is the document opening process executed by the portable terminal 10 and the document server 200.

The above-mentioned means and function are implemented by causing a computer (including a CPU, an information processing device, and various types of terminals) to read and execute a predetermined program. The program is provided, for example, in a form recorded in a computer readable recording medium such as a flexible disk, a CD (such as CD-ROM), and a DVD (such as DVD-ROM and DVD-RAM). In this case, the computer reads the program from the recording medium and executes the program by transmitting and storing it to and in an internal storage device or an external storage device. In addition, the program may be recorded in advance, for example, in a storage device (recording medium) such as a magnetic disk, an optical disk, and a magneto-magnetic disk, and may be provided from the storage device through a communication line to the computer.

As stated above, although embodiments of the present invention have been set forth, the present invention is not limited to the embodiments mentioned above. The present invention is defined by the claims. In addition, the effects described in the embodiments of the present invention are merely illustrative of the best effects resulting from the present invention, and the effects of the present invention are not limited to those described in the embodiments of the present invention.

## Claims

1. A portable terminal (10) for uploading a document to and downloading a document from a document server, the portable terminal (10) being communicably connected to a document server (200) and one or more other portable terminals (10A, 10B), the portable terminal comprising:
means (11, 15) for determining (S11) the document (2) stored in the portable terminal (10) to be uploaded;
means (11, 15) for selecting (S13) an access group (9) including a group of terminals which are allowed to access to the document (2);
means (11, 15) for setting (S14) security parameters of the document (2) based on a security level of the document (2) using security parameters set in advance for each security level of the document, the security parameters being used in determining whether a file is allowed to be opened depending on a location where the file is opened;
means (12, 15) for encoding (S16) the document and transmitting (S16) the encoded document, security parameters and the access group (9) to the document server;
means (12, 17) for transmitting (S19) decoding information for decoding the encoded document to the document server or a device belonging to the reception access group and for receiving (S19) decoding information for decoding the encoded document;
means (12, 18) for requesting (S22) the document server to transmit the encoded document;
means (12, 18) for receiving (S25) the document and the security parameters from the document server;
means (12, 21) for acquiring (S26) information being a current location of the device said information being associated with evaluation of security parameters, and means (11, 18) for decoding (S29) the encoded document and opening (S29) the document only if the information satisfies the security parameters (S28-Yes).

2. The portable terminal according to claim 1, wherein, when a document to be transmitted comprises editable data as a character string, said means (12, 15) for encoding are configured to convert the document into binary data which is not editable as a character string, and then encode and transmit the document to the document server.

3. The portable terminal according to claim 1 or 2, wherein said means (11, 18) for decoding are configured to decode the document only when parameters stored in the storage unit of the portable terminal satisfy conditions which are set in advance or set for each document.

4. The portable terminal according to any one of claims 1-3, wherein said means (11, 18) for decoding are configured to decode the document only when a combination of a current time, a date, and a day of the week satisfies conditions which are set in advance or set for each document.

5. The portable terminal according to any one of claims 1-4, wherein the portable terminal is a mobile phone, a smart phone, a tablet computer, or a laptop computer.

6. A document management method for uploading a document to and downloading a document from a document server, performed by a portable terminal which is communicably connected to a document server and one or more other devices (10A, 10B), the portable terminal further comprising location information acquisition means (21) for acquiring location information, comprising the steps of: encoding a document stored in a storage unit of the portable terminal, and transmitting the document to the document server; wherein said encoding and transmitting comprises:
- determining (S11) the document (2) stored in the portable terminal (10) to be uploaded,
- selecting (S13) an access group (9) including a group of terminals which are allowed to access to the document (2),
- setting (S14) security parameters of the document (2) based on a security level of the document (2) using security parameters set in advance for each security level of the document, the security parameters being used in determining whether a file is allowed to be opened depending on a location where the file is opened,
- encoding (S16) the document and transmitting (S16) the encoded document, security parameters and the access group (9) to the document server,
notifying the document server of an access group, wherein the access group is constituted, as a reception access group, by one or more devices which receive the document transmitted to the document server;
transmitting (S19) decoding information for decoding the encoded document to a device belonging to the reception access group;
receiving (S19) decoding information for decoding the encoded document with a device belonging to the reception access group;
requesting (S22) the document server to transmit the encoded document;
receiving (S25) the document and the security parameters from the document server;
acquiring (S26) information being a current location of the device said information being associated with evaluation of security parameters,
decoding (S29) the encoded document and opening (S29) the document only if the information satisfies the security parameters (S28-Yes), and
after receiving the decoding information, decoding the document only when location information acquired by said location information acquisition means falls within a range which is set in advance or set for each document using the decoding information, when opening the corresponding encoded document.

7. A system comprising a portable terminal according to any one of claims 1-5 and further comprising a document server (200) communicably connected to one or more portable terminals (10, 10A, 10B), comprising:
means (204) for receiving (S17) an encoded document, security parameters and an access group from a first portable terminal (10),
means (206) for storing (S18) the encoded document, security parameters and access group,
means (205) for receiving (S22) a request to provide the document from a requesting portable terminal,
means (205) for transmitting (S24) the encoded document and the security parameters to the requesting mobile terminal if the requesting mobile terminal belongs to the access group (S23-Yes),
whereby the security parameters enable restricting a location where the document (2) can be opened, and whereby the security parameters are determined based on the security level of the document using security parameters that are set in advance for each security level.

8. The system according to claim 7, wherein the reception access group definition comprises timing information restricting access to the document within a time period, a time interval, after a point in time, a reoccurring time period or a combination thereof.

## Patentansprüche

1. Tragbares Endgerät (10) zum Hochladen eines Dokuments in einen und Herunterladen eines Dokuments von einem Dokumentenserver, wobei das tragbare Endgerät (10) kommunikativ mit einem Dokumentenserver (200) und einem oder mehreren anderen tragbaren Endgeräten (10A, 10B) verbunden ist, wobei das tragbare Endgerät Folgendes umfasst:
Mittel (11, 15) zum Bestimmen (S11) des hochzuladenden Dokuments (2), das in dem tragbaren Endgerät (10) gespeichert ist;
Mittel (11, 15) zum Auswählen (S13) einer Zugriffsgruppe (9), die eine Gruppe an Endgeräten beinhaltet, die auf das Dokument (2) zugreifen darf;
Mittel (11, 15) zum Festlegen (S14) von Sicherheitsparametern des Dokuments (2) basiert auf einer Sicherheitsstufe des Dokuments (2) unter Verwendung von Sicherheitsparametern, die im Voraus für jede Sicherheitsstufe des Dokuments festgelegt werden, wobei die Sicherheitsparameter beim Bestimmen verwendet werden, ob eine Datei geöffnet werden darf, abhängig von einem Ort, an dem die Datei geöffnet wird;
Mittel (12, 15) zum Codieren (S16) des Dokuments und Übertragen (S16) des codierten Dokuments, der Sicherheitsparameter und der Zugriffsgruppe (9) an den Dokumentenserver;
Mittel (12, 17) zum Übertragen (S19) von Decodierinformationen zum Decodieren des codierten Dokuments an den Dokumentenserver oder eine Vorrichtung, die zu der Empfangszugriffsgruppe gehört, und zum Empfangen (S19) von Decodierinformationen zum Decodieren des codierten Dokuments;
Mittel (12, 18) zum Anfordern (S22) des Dokumentenservers, das codierte Dokument zu übertragen;
Mittel (12, 18) zum Empfangen (S25) des Dokuments und der Sicherheitsparameter von dem Dokumentenserver;
Mittel (12, 21) zum Erwerben (S26) von Informationen, bei denen es sich um einen aktuellen Ort der Vorrichtung handelt, wobei die Informationen mit Auswertung von Sicherheitsparametern verbunden sind, und
Mittel (11, 18) zum Decodieren (S29) des codierten Dokuments und Öffnen (S29) des Dokuments nur, wenn die Informationen die Sicherheitsparameter (S28-Yes) erfüllen.

2. Tragbares Endgerät nach Anspruch 1, wobei, wenn ein zu übertragendes Dokument bearbeitbare Daten als eine Zeichenfolge umfasst, die Mittel (12, 15) zum Codieren konfiguriert sind, um das Dokument in binäre Daten umzuwandeln, die nicht als eine Zeichenfolge bearbeitbar sind, und dann das Dokument zu codieren und an den Dokumentenserver zu übertragen.

3. Tragbares Endgerät nach Anspruch 1 oder 2, wobei die Mittel (11, 18) zum Decodieren konfiguriert sind, um das Dokument nur zu decodieren, wenn Parameter, die in der Speichereinheit des tragbaren Endgeräts gespeichert sind, Bedingungen erfüllen, die im Voraus festgelegt sind oder für jedes Dokument festgelegt sind.

4. Tragbares Endgerät nach einem der Ansprüche 1-3, wobei die Mittel (11, 18) zum Decodieren konfiguriert sind, um das Dokument nur zu decodieren, wenn eine Kombination aus einer aktuellen Zeit, einem aktuellen Datum und einem aktuellen Wochentag Bedingungen erfüllt, die im Voraus festgelegt sind oder für jedes Dokument festgelegt sind.

5. Tragbares Endgerät nach einem der Ansprüche 1-4, wobei das tragbare Endgerät ein Mobiltelefon, ein Smartphone, ein Tablet-Computer oder ein Laptop-Computer ist.

6. Dokumentverwaltungsverfahren zum Hochladen eines Dokuments in einen und Herunterladen eines Dokuments von einem Dokumentenserver, durchgeführt durch ein tragbares Endgerät, das kommunikativ mit einem Dokumentenserver und einer oder mehreren anderen Vorrichtungen (10A, 10B) verbunden ist, wobei das tragbare Endgerät ferner Ortsinformationserwerbsmittel (21) zum Erwerben von Ortsinformationen umfasst, die folgenden Schritte umfassend:
Codieren eines Dokuments, das in einer Speichereinheit des tragbaren Endgeräts gespeichert ist, und Übertragen des Dokuments an den Dokumentenserver; wobei das Codieren und Übertragen Folgendes umfasst:
- Bestimmen (S11) des hochzuladenden Dokuments (2), das in dem tragbaren Endgerät (10) gespeichert ist,
- Auswählen (S13) einer Zugriffsgruppe (9), die eine Gruppe an Endgeräten beinhaltet, die auf das Dokument (2) zugreifen darf,
- Festlegen (S14) von Sicherheitsparametern des Dokuments (2) basiert auf einer Sicherheitsstufe des Dokuments (2) unter Verwendung von Sicherheitsparametern, die im Voraus für jede Sicherheitsstufe des Dokuments festgelegt sind, wobei die Sicherheitsparameter beim Bestimmen verwendet werden, ob eine Datei geöffnet werden darf, abhängig von einem Ort, an dem die Datei geöffnet wird,
- Codieren (S16) des Dokuments und Übertragen (S16) des codierten Dokuments, der Sicherheitsparameter und der Zugriffsgruppe (9) an den Dokumentenserver,
Benachrichtigen des Dokumentenservers über eine Zugriffsgruppe, wobei die Zugriffsgruppe als eine Empfangszugriffsgruppe durch eine oder mehrere Vorrichtungen gebildet ist, die das an den Dokumentenserver übertragene Dokument empfangen;
Übertragen (S19) von Decodierinformationen zum Decodieren des codierten Dokuments an eine Vorrichtung, die zu der Empfangszugriffsgruppe gehört;
Empfangen (S19) von Decodierinformationen zum Decodieren des codierten Dokuments mit einer Vorrichtung, die zu der Empfangszugriffsgruppe gehört;
Anfordern (S22) des Dokumentenservers, das codierte Dokument zu übertragen;
Empfangen (S25) des Dokuments und der Sicherheitsparameter von dem Dokumentenserver;
Erwerben (S26) von Informationen, bei denen es sich um einen aktuellen Ort der Vorrichtung handelt, wobei die Informationen mit Auswertung von Sicherheitsparametern verbunden sind,
Decodieren (S29) des codierten Dokuments und Öffnen (S29) des Dokuments nur, wenn die Informationen die Sicherheitsparameter (S28-Yes) erfüllen, und
nach dem Empfangen der Decodierinformationen, Decodieren des Dokuments nur, wenn Ortsinformationen, die durch das Ortsinformationserwerbsmittel erworben sind, in einen Bereich fallen, der im Voraus festgelegt ist oder für jedes Dokument unter Verwendung der Decodierinformationen festgelegt ist, wenn das entsprechende codierte Dokument geöffnet wird.

7. System, umfassend ein tragbares Endgerät nach einem der Ansprüche 1-5 und ferner umfassend einen Dokumentenserver (200), der kommunikativ mit einem oder mehreren tragbaren Endgeräten (10, 10A, 10B) verbunden ist, umfassend:
Mittel (204) zum Empfangen (S17) eines codierten Dokuments, von Sicherheitsparametern und einer Zugriffsgruppe von einem ersten tragbaren Endgerät (10),
Mittel (206) zum Speichern (S18) des codierten Dokuments, der Sicherheitsparameter und der Zugriffsgruppe,
Mittel (205) zum Empfangen (S22) einer Aufforderung zum Bereitstellen des Dokuments von einem anfordernden tragbaren Endgerät,
Mittel (205) zum Übertragen (S24) des codierten Dokuments und der Sicherheitsparameter an das anfordernde mobile Endgerät, wenn das anfordernde mobile Endgerät zu der Zugriffsgruppe (S23-Yes) gehört,
wobei die Sicherheitsparameter das Einschränken eines Ortes ermöglichen, an dem das Dokument (2) geöffnet werden kann, und wobei die Sicherheitsparameter basierend auf der Sicherheitsstufe des Dokuments unter Verwendung von Sicherheitsparametern bestimmt werden, die im Voraus für jede Sicherheitsstufe festgelegt sind.

8. System nach Anspruch 7, wobei die Empfangszugriffsgruppendefinition Zeitplanungsinformationen, die Zugriff auf das Dokument innerhalb eines Zeitraums beschränken, ein Zeitintervall, nach einem Zeitpunkt, einen wiederkehrenden Zeitraum oder eine Kombination davon umfasst.

## Revendications

1. Terminal portable (10) pour télécharger un document dans un serveur de documents et télécharger un document depuis un serveur de documents, le terminal portable (10) étant relié en communication avec un serveur de documents (200) et un ou plusieurs autres terminaux portables (10A, 10B), le terminal portable comprenant :
un dispositif (11, 15) pour déterminer (S11) le document (2) stocké dans le terminal portable (10) à télécharger ;
un dispositif (11, 15) pour sélectionner (S13) un groupe d'accès (9) comprenant un groupe de terminaux qui sont autorisés d'accéder au document (2) ;
un dispositif (11, 15) pour établir (S14) des paramètres de sécurité du document (2) sur la base d'un niveau de sécurité du document (2) en utilisant des paramètres de sécurité établis à l'advance pour chaque niveau de sécurité du document, les paramètres de sécurité étant utilisés pour déterminer si un fichier peut être ouvert en fonction de l'emplacement de l'ouverture du fichier ;
un dispositif (12, 15) pour coder (S16) le document et transmettre (S16) le document codé, des paramètres de sécurité, et le groupe d'accès (9) au serveur de documents ;
un dispositif (12, 17) pour la transmission (S19), au serveur de documents ou un dispositif appartenant au groupe d'accès de réception, d'informations de décodage pour décoder le document codé, et pour la réception (S19) d'informations de décodage pour décoder le document codé ;
un dispositif (12, 18) pour demander (S22) au serveur de document de transmettre le document codé ;
un dispositif (12, 18) pour la réception (S25) du document et des paramètres de sécurité du serveur de documents ;
un dispositif (12, 21) pour l'acquisition (S26) d'informations, à savoir un emplacement actuel du dispositif, lesdites informations étant associées avec l'évaluation de paramètres de sécurité, et
un dispositif (11, 18) pour décoder (S29) le document codé, et ouvrir (S29) le document seulement si les informations répondent aux paramètres de sécurité (S28-Yes).

2. Terminal portable selon la revendication 1, dans lequel, lorsqu'un document à transmettre comprend des données éditables en tant que chaîne de caractères, lesdits dispositifs (12, 15) de codage étant configurés pour convertir le document en données binaires non éditables en tant que chaîne de caractères, puis coder et transmettre le document au serveur de documents.

3. Terminal portable selon la revendication 1 ou 2, lesdits dispositifs (11, 18) de décodage étant configurés pour décoder le document seulement lorsque des paramètres stockés dans l'unité de stockage du terminal portable répondent à des conditions établies préalablement, ou établies pour chaque document.

4. Terminal portable selon une quelconque des revendications 1 à 3, lesdits dispositifs (11, 18) de décodage étant configurés pour décoder le document seulement lorsqu'une combinaison de l'heure actuelle, d'une date, et d'un jour de la semaine répond à des conditions établies préalablement, ou établies pour chaque document.

5. Terminal portable selon une quelconque des revendications 1 à 4, le terminal portable étant un téléphone cellulaire, un téléphone intelligent, une tablette numérique, ou un ordinateur portable.

6. Méthode de gestion de documents pour télécharger un document dans un serveur de documents et télécharger un document depuis un serveur de documents, exécutée par un terminal portable relié en communication avec un serveur de documents et un ou plusieurs autres terminaux portables (10A, 10B), le terminal portable comprenant en outre un dispositif d'acquisition d'informations (21) pour acquérir des informations de localisation, comprenant les étapes suivantes :
codage d'un document stocké dans l'unité de stockage du terminal portable, et transmission du document au serveur de documents ; ledit codage et ladite transmission comprenant :
- détermination (S11) du document (2) stocké dans le terminal portable (10) et devant être téléchargé,
- sélection (S13) d'un groupe d'accès (9) comprenant un groupe de terminaux pouvant accéder au document (2),
- établissement (S14) de paramètres de sécurité du document (2) basés sur un niveau de sécurité du document (2) en utilisant des paramètres de sécurité établis préalablement pour chaque niveau de sécurité du document, les paramètres de sécurité étant utilisés pour déterminer si un fichier peut être ouvert en fonction de l'emplacement de l'ouverture du fichier,
- codage (S16) du document et transmission (S16) du document codé, des paramètres de sécurité et du groupe d'accès (9) au serveur de documents ;
notification du serveur de documents d'un groupe d'accès, le groupe d'accès étant constitué, en tant que groupe d'accès de réception, par un ou plusieurs dispositifs recevant le document transmis au serveur de documents ;
transmission (S19) d'informations de décodage pour décoder le document codé à un dispositif appartenant au groupe d'accès de réception ;
réception (S19) d'informations de décodage pour décoder le document codé à un dispositif appartenant au groupe d'accès de réception ;
demande (S22) au serveur de documents de transmission du document codé ;
réception (S25), du serveur de documents, du document et des paramètres de sécurité ;
acquisition (S26) d'informations, à savoir un emplacement actuel du dispositif, lesdites informations étant associées avec l'évaluation de paramètres de sécurité,
décodage (S29) du document codé, et ouverture (S29) du document seulement si les informations répondent aux paramètres de sécurité (S28-Yes), et
après la réception des informations de décodage, décodage du document seulement lorsque les informations de localisation acquises par ledit dispositif d'acquisition d'informations de localisation sont comprises dans une plage établie préalablement ou établie pour chaque document en utilisant les informations de décodage, lors de l'ouverture du document codé correspondant.

7. Système comprenant un terminal portable selon une quelconque des revendications 1-5, et comprenant en outre un serveur de documents (200) connecté en communication avec un ou plusieurs terminaux portables (10, 10A, 10B), comprenant :
un dispositif (204) pour recevoir (S17), d'un premier terminal portable (10), un document codé, des paramètres de sécurité, et un groupe d'accès,
un dispositif (206) pour stocker (S18) le document codé, les paramètres de sécurité, et le groupe d'accès,
un dispositif (205) pour recevoir (S22) une demande de fourniture du document depuis un terminal portable,
un dispositif (205) pour transmettre (S24) le document codé et les paramètres de sécurité au terminal portable demandeur si le terminal portable demandeur appartient au groupe d'accès (S23-Yes),
les paramètres de sécurité permettant de restreindre un emplacement où le document (2) peut être ouvert, et les paramètres de sécurité étant déterminés en fonction du niveau de sécurité du document, en utilisant des paramètres de sécurité établis préalablement pour chaque niveau de sécurité.

8. Système selon la revendication 7, la définition du groupe d'accès de réception comprenant des informations temporelles limitant l'accès au document à une tranche horaire, un laps de temps, après un certain moment, une période de temps récurrent, ou une combinaison de ces derniers.
